# EUROPÄISCHE PATENTSCHRIFT

(11) **EP 1 583 675 B1**
(45) Veröffentlichungstag und Bekanntmachung des Hinweises auf die Patenterteilung: **20.12.2006**
(21) Anmeldenummer: 03785598.8
(22) Anmeldetag: 17.12.2003
(51) Int. Cl.: B60R 21/16

(54) **AIRBAGSYSTEM**
AIRBAG SYSTEM
SYSTEME D'AIRBAG

(30) Priorität: 14.01.2003 DE 10301715
(43) Veröffentlichungstag der Anmeldung: 12.10.2005
(73) Patentinhaber: Takata-Petri AG, 63743 Aschaffenburg (DE)
(72) Erfinder: MEISSNER, Dirk, 13467 Berlin (DE); AL-SAMARAE, Sami, 13187 Berlin (DE)
(74) Vertreter: Baumgärtel, Gunnar
(86) Internationale Anmeldenummer: PCT/DE2003/004214
(87) Internationale Veröffentlichungsnummer: WO 2004/067332

(56) Entgegenhaltungen:
- DE-A- 10 021 893
- US-B1- 6 431 586
- PATENT ABSTRACTS OF JAPAN Bd. 2000, Nr. 09, 13. Oktober 2000 (2000-10-13) & JP 2000 168486 A (NISSAN MOTOR CO LTD), 20. Juni 2000 (2000-06-20)

## Beschreibung

Die Erfindung betrifft ein Airbagsystem nach dem Oberbegriff des Anspruchs 1.

Zur Erzielung einer bestimmten Ausbreitungsrichtung und -tiefe von Airbags und damit zur Erzielung einer verbesserten Schutzfunktion ist es bekannt, bestimmte Formen eines Airbags im aufgeblasenen Zustand durch Spannbänder zu erzielen, bzw. Airbags eine von der kreisrunden bzw. elliptischen Querschnittsform abweichende Form zu geben. So ist aus der WO 96/38324 ein Airbagmodul bekannt, bei dem der Gassack mindestens einen Bereich aufweist, der gegenüber einem weiteren Bereich einen verengten Querschnitt aufweist. Ein solcher Gassack läßt sich ohne die Anordnung von Fangbändern gezielt in eine bestimmte Richtung aufblasen, da er sich in den Bereichen mit verengtem Querschnitt weniger ausbreiten kann als in den übrigen Bereichen.

Der Nachteil dieses Airbags besteht darin, daß er wegen der besonderen Form teurer als Airbags mit kreisrunder oder elliptischer Zuschnittsform ist.

Weiterhin ist aus der DE 298 04 239 ein Airbag bekannt, bei dem Bereiche der Wandung mit Reißnähten abgenäht sind. Die Reißnähte können mittels Fäden unterschiedlicher Stärke ausgeführt sein. Dadurch kann das Volumen und damit die Härte des Gassacks entsprechend der Belastung individuell eingestellt werden, d.h. der Gassack kann sich an Insassen unterschiedlichen Gewichts und an verschiedene Gasgeneratorleistungen anpassen.

Der Nachteil dieser Anordnung besteht darin, daß zusätzliche Näharbeiten am Gassack erforderlich sind und daß dessen Ausbreitungsrichtung und -tiefe nicht beeinflußbar sind.

In der DE 100 21 893 ist ein Airbagsystem für ein Kraftfahrzeug nach dem Oberbegriff der unabhangigen Ansprüche 1 bis 3 offenbart.

Der Erfindung liegt die Aufgabe zugrunde, eine unterschiedliche Beeinflussung der Ausbreitungsrichtung und -tiefe eines Airbags unabhängig von der Zuschnittsform des Airbags und unabhängig vom Verlauf der Nähte des Airbags zu erreichen.

Erfindungsgemäß wird das gemäß den Merkmalen der unabhangigen Ansprüche 1 bis 3 erreicht.

Bei solch einem Airbagsystem für ein Kraftfahrzeug mit mindestens einem aufblasbaren Airbag für den Insassenschutz ist einem Hauptairbag mindestens ein zusätzlicher, aufblasbarer Airbag geringeren Volumens zur Erhöhung der Entfaltungstiefe und/oder Veränderung der Entfaltungsrichtung des Hauptairbags zugeordnet.

Der kleinere zusätzliche Airbag drückt nach seiner Entfaltung an einer vorbestimmten Stelle auf den Hauptairbag, so daß dieser in Abhängigkeit von der Unfallsituation in eine andere Richtung entfaltet wird, als es ohne zusätzlichen Airbag der Fall wäre. Weiterhin wird eine größere Entfaltungstiefe erreicht, als es seiner geometrischen Form entspricht, indem der zusätzliche Airbag den Hauptairbag in Richtung des Insassen verschiebt. Die vergrößerte Airbagtiefe verursacht eine frühzeitige Rückhaltung und damit eine Reduktion der Belastungswerte. Dadurch ist es möglich, dem Hauptairbag eine einfache geometrische Form zu geben, z.B. eine kreisrunde oder elliptische Form, so daß er einfach herstellbar ist. Das Standardairbagsystem, wie es in Kraftfahrzeugen üblich ist, kann somit erhalten bleiben.

Es ist zweckmäßig, daß mindestens einem zusätzlichen Airbag ein gesonderter Gasgenerator bzw. bei der Verwendung mehrstufiger Gasgeneratoren eine anteilige Zündstufe des Gasgenerators zugeordnet ist. Mittels einer geeigneten Sensorik wird eine konkret vorliegende Unfallsituation erfaßt, so daß in Abhängigkeit von der Art des Crashs, z.B. Frontal-, Schräg- oder Seitencrash unterschiedliche zusätzliche Airbags entfaltet werden, und damit eine solche Entfaltungsrichtung und -tiefe des jeweiligen Hauptairbags erzielt wird, die den besten Schutz des Insassen gewährleistet.

In einer Anwendungsform ist mindestens ein zusätzlicher Airbag am Lenkrad so angeordnet, daß er im aufgeblasenen Zustand zwischen dem Lenkrad und dem als Hauptairbag ausgebildeten Fahrerairbag liegt. Es ist zweckmäßig, bei dieser Anwendungform einen ringförmigen zusätzlichen Airbag oder zwei halbringfömige zusätliche Airbags vorzusehen. Es ist aber auch möglich, entsprechend der größten Wahrscheinlichkeit eines Offset- oder Schrägaufpralls einen halbringförmigen zusätzlicher Airbag an der, der Fahrertür abgewandten, Seite des Lenkrades vorzusehen. Bei einem Offsetaufprall handelt es sich um einen Frontalaufprall, bei dem das Kraftfahrzeug nur mit einem Teil seiner Vorderseite auf ein Hindernis prallt.

In einer weiteren Anwendungsform ist mindestens ein zusätzlicher Airbag auf der Beifahrerseite an der Instumententafel so angeordnet, daß er im aufgeblasenen Zustand zwischen der Instrumententafel und dem als Hauptairbag ausgebildeten Beifahrerairbag liegt. In einer Ausführungsform ist der zusätzliche Airbag so angeordnet, daß er im aufgeblasenen Zustand an der Vorderseite der Instrumententafel liegt. In einer weiteren Ausführungsform ist der zusätzliche Airbag so angeordnet, daß er im aufgeblasenen Zustand zwischen der Instrumententafel und der Windschutzscheibe liegt. Es ist zweckmäßig, daß die zusätzlichen Airbags bei dieser Anwendungsform im aufgeblasenen Zustand die Form eines Ellipsoides oder Zylinders aufweisen, die vorzugsweise liegend angeordnet sind.

In einer weiteren Anwendungsform ist mindestens ein zusätzlicher Airbag seitlich eines Insassen so angeordnet, daß er im aufgeblasenen Zustand zwischen einer Tür bzw. Seitenwand des Kraftfahrzeuges und einem als Seitenairbag ausgebildeten Hauptairbag liegt.

Da es heute üblich ist, daß Kraftfahrzeuge Fahrer-, Beifahrer- und Seitenairbags als komplexes System aufweisen, ist es zweckmäßig, daß jedem dieser Anwendungsformen des Airbags mindestens ein erfindungsgemäßer zusätzlicher Airbag zugeordnet ist, d.h. daß auch ein komplexes System von zusätzlichen Airbags vorhanden ist.

Ein Gasgenerator bzw. eine anteilige Zündstufe eines mehrstufigen Generators für den zusätzlichen Airbag kann sowohl gleichzeitig mit einem Gasgenerator für den Hauptairbag zündbar sein als auch zeitversetzt zum Gasgenerator für den Hauptairbag zündbar sein. Das zeitversetzte Zünden kann sowohl vor als auch nach der Zündung des Gasgenerators für den Hauptairbag erfolgen.

Das Volumen des zusätzlichen Airbags beträgt vorzugsweise 5 - 30 Prozent des Volumens des Hauptairbags.

Die Erfindung soll in Ausführungsbeispielen anhand von Zeichnungen erläutert werden. Es zeigen:
- Fig. 1: einen Schnitt durch ein konventionelles Fahrerairbagsystem;
- Fig. 2: eine Draufsicht auf eine erste Ausführungsform eines erfindungsgemäßen Fahrerairbagsystem;
- Fig. 3: einen Schnitt durch das Fahrerairbagsystems gemäß der Schnittlinie III-III der Fig 2;
- Fig. 4: eine Draufsicht auf eine zweite Ausführungsform eines erfindungsgemäßen Fahrerairbagsystems;
- Fig. 5: einen Schnitt durch das Fahrerairbagsystem gemäß der Schnittlinie V-V der Fig. 4;
- Fig. 6: eine Seitenansicht A gemäß der Fig. 4;
- Fig. 7: einen Schnitt durch ein konventionelles Beifahrerairbagsystem;
- Fig. 8: einen Schnitt durch eine erste Ausführungsform eines erfindungsgemäßen Beifahrerairbagsystems;
- Fig. 9: einen Schnitt durch ein konventionelles Beifahrerairbagsystem;
- Fig. 10: einen Schnitt durch eine zweite Ausführungsform eines erfindungsgemäßen Beifahrerairbagsystems;
- Fig.11: einen Schnitt durch ein erfindungsgemäßes Seitenairbagsystem.

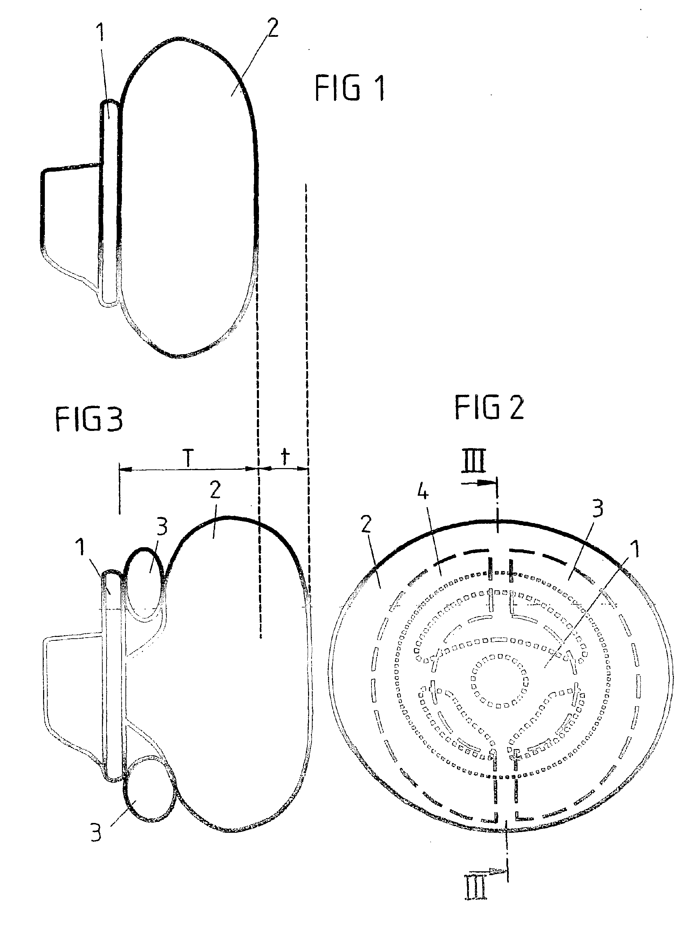

In der Fig. 1 sind schematisch ein Lenkrad 1 und ein entfalteter Fahrerairbag 2 konventioneller Art dargestellt. Dieser Airbag ist aus kreisrunden Zuschnitten hergestellt und es ist ersichtlich, daß er nach der Entfaltung auf dem Lenkrad aufliegt und sich bis zu einer Ausbreitungstiefe T in Richtung des nicht dargestellten Insassen erstreckt.

Bei der in den Figuren 2 und 3 dargestellten ersten Ausführungsform eines erfindungsgemäßen Fahrerairbagsystems sind zwei halbringförmige zusätzliche Airbags 3, 4 angeordnet, die auf der linken und rechten Seite des für die Geradeausfahrt ausgerichteten Lenkrades vorgesehen sind. Aus der Fig. 3, in der ein entfalteter Airbag dargestellt sind, ist ersichtlich, wie diese zusätzlichen Airbags den als Hauptairbag angeordneten Fahrerairbag 2 verformen. Durch den Druck der entfalteten zusätzlichen Airbags 3, 4 auf den Fahrerairbag 2 wird dessen Ausbreitungstiefe in Richtung des Insassen um den Wert vergrößert. Die Ausbreitungsrichtung des Fahrerairbags 2 wird im dargestellten Fall, in dem beide zusätzlichen Airbags entfaltet sind, nur unwesentlich beeinflußt. Lediglich die außermittige Lage der zusätzlichen Airbags gegenüber dem Fahrerairbag (Fig.2) beeinfußt die Ausbreitungsrichtung des Fahrerairbags geringfügig.

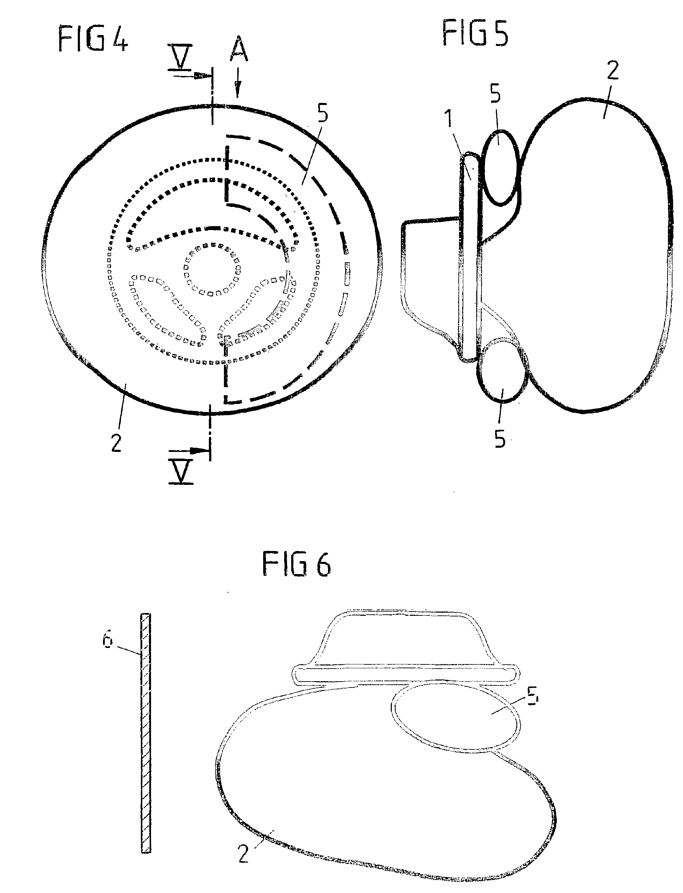

Bei der Ausführungsform der Figuren 4-6, in denen ebenfalls die entfalteten Airbags dargestellt sind, ist ein halbringförmiger zusätzlicher Airbag 5 an der, der Fahrertür 6 abgewandten Seite des Lenkrades 1 vorgesehen. Wie aus der Ansicht der Fig 6 erkennbar ist, wird in diesem Fall nicht nur die Ausbreitungstiefe des Fahrerairbags sondern auch dessen Ausbreitungsrichtung beeinflußt. Wie aus der Fig 6 ersichtlich ist, weist der Fahrerairbag auf der dem Beifahrer zugewandten Seite eine größere Ausbreitungstiefe auf als auf der der Fahrertür zugewandten Seite. Diese Anordnung für die dargestellte einseitige Vergrößerung der Ausbreitungstiefe verbessert den Schutz des Insassen für den Fall, daß ein Offsetaufprall auf der linken Vorderseite des Kraftfahrzeugs erfolgt. In diesem Fall besteht bei einem Airbag mit konstanter Ausbreitungstiefe die Gefahr, daß der Fahrer rechts vom entfalteten Airbag abrutscht und auf die Instrumententafel aufschlägt. Wegen der dargestellten einseitigen Vergrößerung der Ausbreitungstiefe bei dem erfindungsgemäßen Airbagsystem besteht diese Gefahr nicht mehr oder wird zumindest stark vermindert.

Die gleiche Wirkung kann auch mit dem in den Figuren 2 und 3 dargestellten Airbagsystem erzielt werden, wenn bei dem vorgenannten Crashfall nur der zusätzliche Airbag 3 entfaltet wird.

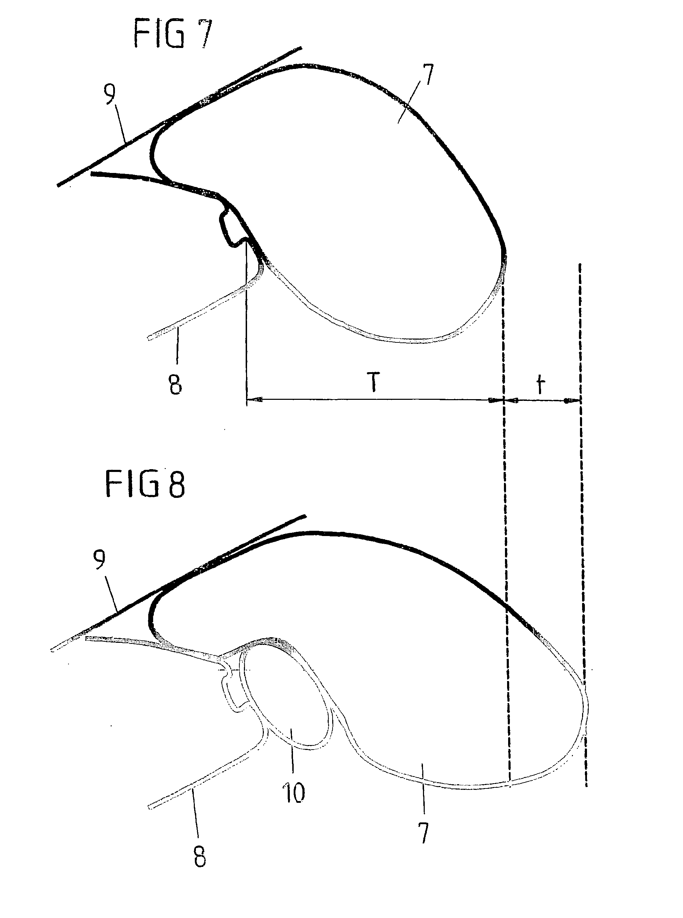

In der Fig. 7 ist ein Beifahrerairbagsystem konventioneller Bauart mit entfaltetem Beifahrerairbag 7 dargestellt. Dieser breitet sich einerseits zwischen der Instrumententafel 8 und der Windschutzscheibe 9 des Kraftfahrzeugs und andererseits in Richtung des nicht dargestellten Insassen aus. In dieser Richtung wird eine Ausbreitungstiefe T erzielt.

In der Fig. 8 ist ein erfindungsgemäßes Beifahrerairbagsystem dargestellt, bei dem ein zusätzlicher Airbag 10 an der Vorderseite der Instrumententafel 8 vorgesehen ist. Es ist ersichtlich, daß sich bei dieser Anordnung die Ausbreitung des Airbags zwischen der Instrumententafel 8 und der Windschutzscheibe 9 nicht verändert. Dagegen ändert sich die Ausbreitungsrichtung und -tiefe in Richtung des Insassen. Der Beifahrerairbag 7 breitet sich nicht so weit nach unten aus wie in der Fig. 7. Dagegen wird die Ausbreitungstiefe um den Betrag t vergrößert.

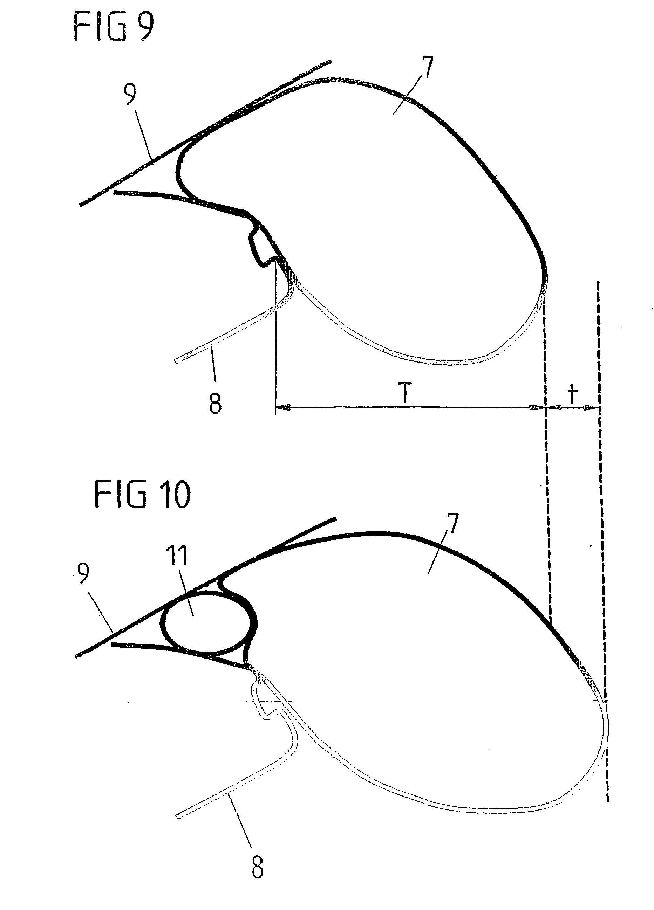

Bei dem erfindungsgemäßen Beifahrerairbagsystem der Fig. 10 ist ein zusätzlicher Airbag 11 zwischen der Instrumententafel 8 und der Windschutzscheibe 9 vorgesehen. Auch bei dieser Ausführungsform ändert sich die Ausbreitungsrichtung und -tiefe durch den Einfluß des zusätzlichen Airbags 11. Auch in diesem Fall breitet sich der Beifahrerairbag nicht so weit nach unten aus wie bei dem in der Fig. 9 dargestellten konventionenen System, während sich die Ausbreitungstiefe um den Betrag t vergrößert.

Die zusätzlichen Airbags 10 und 11, die in den Figuren 8 und 10 nur im Querschnitt dargestellt sind, weisen bei diesen Ausführungsbeispielen die Form eines liegenden Ellipsoides oder Zylinders auf.

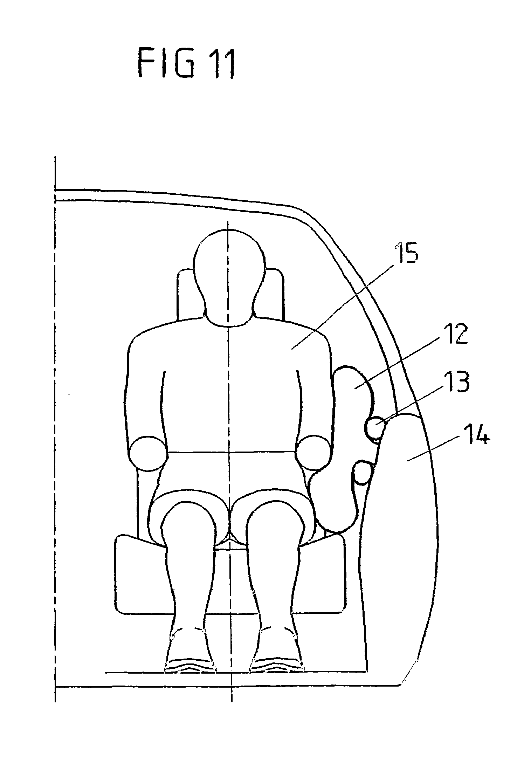

In der Fig. 11 ist ein erfindungsgemäßes Seitenairbagsvstem dargestellt. Dem Seitenairbag 12 als Hauptairbag ist ein zusätzlicher Airbag 13 zugeordnet. Beide Airbags entfalten sich aus einer Fahrzeugtür 14 heraus. Auch in diesem Fall wird die Ausbreitungstiefe des Seitenairbags 12 in Richtung eines Insassen 15 vergrößert.

## Patentansprüche

1. Airbagsystem für ein Kraftfahrzeug mit mindestens einem aufblasbaren Airbag für den Insassenschutz, bei dem einem Hauptairbag (2) mindestens ein zusätzlicher Airbag (3, 4, 5) geringeren Volumens zur Erhöhung der Entfaltungstiefe und/oder Veränderung der Entfaltungsrichtung des Hauptairbags (2) zugeordnet ist,
**dadurch gekennzeichnet,**
**daß** mindestens ein zusätzlicher Airbag (3, 4, 5) am Lenkrad (1) so angeordnet ist, daß er im aufgeblasenen Zustand zwischen dem Lenkrad (1) und dem als Hauptairbag ausgebildeten Fahrerairbag (2) liegt.

2. Airbagsystem für ein Kraftfahrzeug mit mindestens einem aufblasbaren Airbag für- den Insassenschutz, bei dem einem Hauptairbag (7) mindestens ein zusätzlicher Airbag (10, 11) geringeren Volumens zur Erhöhung der Entfaltungstiefe und/oder Veränderung der Entfaltüngsrichtung des Hauptairbags (7) zugeordnet ist, **dadurch gekennzeichnet, daß** mindestens ein zusätzlicher Airbag (10, 11) auf der Beifahrerseite an der Instumententafel (8) so angeordnet, ist, daß er im aufgeblasenen Zustand zwischen der Instrumententafel (8) und dem als Hauptairbag ausgebildeten Beifahrerairbag (7) liegt.

3. Airbagsystem für ein Kraftfahrzeug mit mindestens einem aufblasbaren Airbag für den Insassenschutz, bei dem einem Hauptairbag (12) mindestens ein zusätzlicher Airbag (13) geringeren Volumens zur Erhöhung der Entfaltungstiefe und/oder Veränderung der Entfaltungsrichtung des Hauptairbags (12) zugeordnet ist, **dadurch gekennzeichnet, daß** mindestens ein zusätzlicher Airbag (13) seitlich eines Insassen (15) so angeordnet ist, daß er im aufgeblasenen Zustand zwischen einer Tür (14) bzw. Seitenwand des Kraftfahrzeuges und einem als Seitenairbag (12) ausgebildeten Hauptairbag liegt.

4. Airbagsystem nach mindestens einem der vorhergehenden Ansprüche, **dadurch gekennzeichnet, daß** mindestens einem zusätzlichen Airbag (3, 4, 5, 10, 11, 13) ein gesonderter Gasgenerator mit Sensor zur Auslösung der Zündung des Gasgenerators im Crashfall zugeordnet ist.

5. Airbagsystem nach mindestens einem der vorhergehenden Ansprüche, **dadurch gekennzeichnet, daß** bei Verwendung mehrstufiger Gasgeneratoren mindestens einem zusätzlichen Airbag (3, 4, 5, 10, 21) eine anteilige Zündstufe des Gasgenerators zugeordnet ist.

6. Airbagsystem nach mindestens einem der Ansprüche 1, 4 oder 5, **dadurch gekennzeichnet, daß** ein ringförmiger zusätzlicher Airbag vorgesehen ist.

7. Airbagsystem nach mindestens einem der Ansprüche 1, 4 oder 5, **dadurch gekennzeichnet, daß** zwei halbringförmige zusätzliche Airbags (3, 4) vorgesehen sind.

8. Airbagsystem nach mindestens einem der Ansprüche 1, 4 oder 5, **dadurch gekennzeichnet, daß** ein halbringförmiger zusätzlicher Airbag (5) an der, der Fahrertür (6) abgewandten Seite des Lenkrades (1) vorgesehen ist.

9. Airbagsystem nach mindestens einem der Ansprüche 2, 4 oder 5, **dadurch gekennzeichnet, daß** der zusätzliche Airbag (10) so angeordnet ist, daß er im aufgeblasenen Zustand an der Vorderseite der Instrumententafel (8) liegt.

10. Airbagsystem nach mindestens einem der Ansprüche 2, 4, 5 oder 9 , **dadurch gekennzeichnet, daß** der zusätzliche Airbag (11) so angeordnet ist, daß er im aufgeblasenen Zustand zwischen der Instrumententafel (8) und der Windschutzscheibe (9) liegt.

11. Airbagsystem nach mindestens einem der Ansprüche 2, 4, 5, 9 oder 10 , **dadurch gekennzeichnet, daß** der zusätzliche Airbag (10) im aufgeblasenen Zustand die Form eines Ellipsoides aufweist.

12. Airbagsystem nach mindestens einem der Ansprüche 2, 4, 5, oder 9 bis 11, **dadurch gekennzeichnet, daß** der zusätzliche Airbag (10) im aufgeblasenen Zustand Zylinderform hat.

13. Airbagsystem nach mindestens einem der Ansprüche 11 oder 12, **dadurch gekennzeichnet, daß** der zusätzliche Airbag (10) die Form eines liegenden Ellipsoides bzw. Zylinders aufweist.

14. Airbagsystem nach mindestens einem der vorhergehenden Ansprüche, **dadurch gekennzeichnet, daß** ein Gasgenerator bzw. eine anteilige Zündstufe eines mehrstufigen Generators für den zusätzlichen Airbag (3, 4, 5, 10, 13) gleichzeitig mit einem Gasgenerator für den Hauptairbag (2, 7, 12) zündbar ist.

15. Airbagsystem nach mindestens einem der vorhergehenden Ansprüche, **dadurch gekennzeichnet, daß** ein Gasgenerator bzw. eine anteilige Zündstufe eines mehrstufigen Generators für den zusätzlichen Airbag (3, 4, 5, 10, 13) zeitversetzt zu einem Gasgenerator für den Hauptairbag (2, 7, 12) zündbar ist.

16. Airbagsystem nach mindestens einem der vorhergehenden Ansprüche, **dadurch gekennzeichnet, daß** das Volumen des zusätzlichen Airbags (3, 4, 5, 10. 13) 5 - 30 Prozent des Volumens des Hauptairbags (2, 7, 12) aufweist.

## Claims

1. Airbag system for a motor vehicle with at least one inflatable airbag for occupant protection, in which a main airbag (2) is assigned at least one additional airbag (3, 4, 5) of lower volume in order to increase the deployment depth and/or to vary the deployment direction of the main airbag (2), **characterized in that** at least one additional airbag (3, 4, 5) is arranged on the steering wheel (1) in such a way that, in the inflated state, it lies between the steering wheel (1) and the driver's airbag (2) designed as the main airbag.

2. Airbag system for a motor vehicle with at least one inflatable airbag for occupant protection, in which a main airbag (7) is assigned at least one additional airbag (10, 11) of lower volume in order to increase the deployment depth and/or to vary the deployment direction of the main airbag (7), **characterized in that** at least one additional airbag (10, 11) is arranged on the front-seat passenger's side on the instrument panel (8) in such a way that, in the inflated state, it lies between the instrument panel (8) and the front-seat passenger's airbag (7) designed as the main airbag.

3. Airbag system for a motor vehicle with at least one inflatable airbag for occupant protection, in which a main airbag (12) is assigned at least one additional airbag (13) of lower volume in order to increase the deployment depth and/or to vary the deployment direction of the main airbag (12), **characterized in that** at least one additional airbag (13) is arranged laterally with respect to an occupant (15) in such a way that, in the inflated state, it lies between a door (14) or side wall of the motor vehicle and a main airbag designed as a side airbag (12).

4. Airbag system according to at least one of the preceding claims, **characterized in that** at least one additional airbag (3, 4, 5, 10, 11, 13) is assigned a separate gas generator with a sensor for triggering the ignition of the gas generator in the event of a crash.

5. Airbag system, as claimed at least one of the preceding claims, **characterized in that**, if multistage gas generators are used, at least one additional airbag (3, 4, 5, 10, 11) is assigned a proportionate ignition stage of the gas generator.

6. Airbag system according to at least one of Claims 1, 4 and 5, **characterized in that** an annular additional airbag is provided.

7. Airbag system according to at least one of Claims 1, 4 and 5, **characterized in that** two semiannular additional airbags (3, 4) are provided.

8. Airbag system according to at least one of Claims 1, 4 and 5, **characterized in that** a semiannular additional airbag (5) is provided on that side of the steering wheel (1) which faces away from the driver's door (6).

9. Airbag system according to at least one of Claims 2, 4 and 5, **characterized in that** the additional airbag (10) is arranged in such a way that, in the inflated state, it lies on the front side of the instrument panel (8).

10. Airbag system according to at least one of Claims 2, 4, 5 and 9, **characterized in that** the additional airbag (11) is arranged in such a way that, in the inflated state, it lies between the instrument panel (8) and the windshield (9).

11. Airbag system according to at least one of Claims 2, 4, 5, 9 and 10, **characterized in that**, in the inflated state, the additional airbag (10) is in the form of an ellipsoid.

12. Airbag system according to at least one of Claims 2, 4, 5 and 9 to 11, **characterized in that**, in the inflated state, the additional airbag (10) is in the form of a cylinder.

13. Airbag system according to at least one of claims 11 and 12, **characterized in that** the additional airbag, (10) is in the form of a horizontal ellipsoid or, cylinder.

14. Airbag system according to at least one of the preceding claims, **characterized in that** a gas generator or a proportionate ignition stage of a multistage generator for the additional airbag (3, 4, 5, 10, 13) can be ignited simultaneously with a gas generator for the main airbag (2, 7, 12).

15. Airbag system according to at least one of the preceding claims, **characterized in that** a gas generator or a proportionate ignition stage of a multistage generator of the additional airbag (3, 4, 5, 10, 13) can be ignited with a time offset in relation to a gas generator for the main airbag (2, 7, 12).

16. Airbag system according to at least one of the preceding claims, **characterized in that** the volume of the additional airbag (3, 4, 5, 10, 13) is 5 - 30 per cent of the volume of the main airbag (2, 7, 12).

## Revendications

1. Système à coussin gonflable pour un véhicule automobile comprenant au moins un coussin d'air gonflable pour la protection d'un occupant, dans lequel au moins un coussin d'air additionnel (3, 4, 5) de plus petit volume est associé à un coussin d'air principal (2) pour augmenter la profondeur de déploiement et/ou pour modifier la direction de déploiement du coussin d'air principal (2),
**caractérisé en ce que**
au moins un coussin d'air additionnel (3, 4, 5) est agencé sur le volant (1) de telle manière qu'à l'état gonflé il se trouve entre le volant (1) et le coussin d'air du conducteur (2) réalisé à titre de coussin d'air principal.

2. Système à coussin gonflable pour un véhicule automobile comprenant au moins un coussin d'air gonflable pour la protection d'un occupant, dans lequel au moins un coussin d'air additionnel (10, 11) de plus petit volume est associé à un coussin d'air principal (7) pour augmenter la profondeur de déploiement et/ou pour modifier la direction de déploiement du coussin d'air principal (7),
**caractérisé en ce que**
au moins un coussin d'air additionnel (10, 11) est agencé sur le côté passager au niveau du tableau de bord (8) de telle manière qu'à l'état gonflé il se trouve entre le tableau de bord (8) et le coussin d'air du passager (7) réalisé à titre de coussin d'air principal.

3. Système à coussin gonflable pour un véhicule automobile comprenant au moins un coussin d'air gonflable pour la protection d'un occupant, dans lequel au moins un coussin d'air additionnel (13) de plus petit volume est associé à un coussin principal (12) pour augmenter la profondeur de déploiement et/ou pour modifier la direction de déploiement du coussin d'air principal (12),
**caractérisé en ce que**
au moins un coussin d'air additionnel (13) est agencé latéralement par rapport à un occupant (15) de telle manière qu'à l'état gonflé il se trouve entre une porte (14) ou respectivement une paroi latérale du véhicule automobile et un coussin d'air principal réalisé à titre de coussin d'air latéral (12).

4. Système à coussin gonflable selon l'une au moins des revendications précédentes, **caractérisé en ce qu'**un générateur de gaz particulier avec détecteur pour déclencher l'allumage du générateur de gaz dans le cas d'une collision est associé à un coussin d'air additionnel (3, 4, 5, 10, 11, 13).

5. Système à coussin gonflable selon l'une au moins des revendications précédentes, **caractérisé en ce que** dans le cas de l'utilisation de générateurs de gaz à plusieurs étages, un étage d'allumage partiel du générateur de gaz est associé à au moins un coussin d'air additionnel (3, 4, 5, 10, 11).

6. Système à coussin gonflable selon l'une au moins des revendications 1, 4 ou 5, **caractérisé en ce qu'**il est prévu un coussin d'air additionnel de forme annulaire.

7. Système à coussin gonflable selon l'une au moins des revendications 1, 4 ou 5, **caractérisé en ce qu'**il est prévu deux coussins d'air additionnels (3, 4) de forme demi-annulaire.

8. Système à coussin gonflable selon l'une au moins des revendications 1, 4 ou 5, **caractérisé en ce qu'**il est prévu un coussin d'air additionnel (5) de forme demi-annulaire du côté du volant (1) détourné de la porte côté conducteur (6).

9. Système à coussin gonflable selon l'une au moins des revendications 2, 4 ou 5, **caractérisé en ce que** le coussin d'air additionnel (10) est agencé de telle manière qu'à l'état gonflé il se trouve sur le côté avant du tableau de bord (8).

10. Système à coussin gonflable selon l'une au moins des revendications 2, 4, 5 ou 9, **caractérisé en ce que** le coussin d'air additionnel (11) est agencé de telle manière qu'à l'état gonflé il se trouve entre le tableau de bord (8) et le pare-brise (9).

11. Système à coussin gonflable selon l'une au moins des revendications 2, 4, 5, 9 ou 10, **caractérisé en ce que** le coussin d'air additionnel (10) présente à l'état gonflé la forme d'un ellipsoïde.

12. Système à coussin gonflable selon l'une au moins des revendications 2, 4, 5 ou 9 à 11, **caractérisé en ce que** le coussin d'air additionnel (10) a une forme cylindrique à l'état gonflé.

13. Système à coussin gonflable selon l'une au moins des revendications 11 ou 12, **caractérisé en ce que** le coussin d'air additionnel (10) présente la forme d'un ellipsoïde ou d'un cylindre couché.

14. Système à coussin gonflable selon l'une au moins des revendications précédentes, **caractérisé en ce qu'**un générateur de gaz ou un étage d'allumage partiel d'un générateur à plusieurs étages pour le coussin d'air additionnel (3, 4, 5, 10, 13) est susceptible d'être allumé simultanément avec un générateur de gaz pour le coussin d'air principal (2, 7, 12).

15. Système à coussin gonflable selon l'une au moins des revendications précédentes, **caractérisé en ce qu'**un générateur de gaz ou un étage d'allumage partiel d'un générateur à plusieurs étages pour le coussin d'air additionnel (3, 4, 5, 10, 13) est susceptible d'être allumé avec un décalage temporel par rapport à un générateur de gaz pour le coussin d'air principal (2, 7, 12).

16. Système à coussin gonflable selon l'une au moins des revendications précédentes, **caractérisé en ce que** le volume du coussin d'air additionnel (3, 4, 5, 10, 13) représente 5 à 30 % du volume du coussin d'air principal (2, 7, 12).
